# EUROPEAN PATENT APPLICATION

(11) **EP 4 756 898 A1**
(43) Date of publication of application: **10.06.2026**
(21) Application number: 25208476.9
(22) Date of filing: 14.10.2025
(51) Int. Cl.: H01M 4/133, H01M 4/134, H01M 4/36, H01M 4/38, H01M 4/583

(54) **ELECTRODE AND SECONDARY BATTERY INCLUDING SAME**

(30) Priority: 03.12.2024 KR 20240177089
(71) Applicant: SAMSUNG SDI CO., LTD., Yongin-si, Gyeonggi-do 17084 (KR)
(72) Inventor: Kim, Jongwan, 17084 Yongin-si, Gyeonggi-do (KR)
(74) Representative: Meissner Bolte Partnerschaft mbB

(57) **Abstract**

An electrode (100, 200, 300, 400, 500, 600, 700) includes a current collector (110, 210, 310, 410, 510, 610, 710), a first active material layer (120, 220, 320, 420, 520, 620, 720) on a first surface of the current collector (110, 210, 310, 410, 510, 610, 710), and a second active material layer (150, 250, 350, 450, 550, 650, 750) on a second surface of the current collector (110, 210, 310, 410, 510, 610, 710), the second surface being opposite the first surface, wherein at least one of the first active material layer (120, 220, 320, 420, 520, 620, 720) and the second active material layer (150, 250, 350, 450, 550, 650, 750) includes a first pattern portion (130, 230, 330, 430, 530, 630, 730) and a second pattern portion (140, 240, 340, 440, 540, 640, 740), which are alternately arranged in a longitudinal direction of the current collector (110, 210, 310, 410, 510, 610, 710), wherein the second pattern portion (140, 240, 340, 440, 540, 640, 740) includes an active material with a higher swelling rate during charging than an active material in the first pattern portion (130, 230, 330, 430, 530, 630, 730), and wherein the second pattern portion (140, 240, 340, 440, 540, 640, 740) is thinner than the first pattern portion (130, 230, 330, 430, 530, 630, 730).

## Description

The present invention relates to an electrode and a secondary battery including the same.

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, laptop computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

An electrode assembly accommodated in a case of a secondary battery can be formed by forming an active material layer of a constant thickness on a current collector to produce positive and negative electrodes and then stacking or winding the positive and negative electrodes with a separator interposed therebetween.

The above information disclosed in this Background section is for enhancement of understanding of the background of the present invention, and therefore, it may contain information that does not constitute related (or prior) art.

According to the invention, an electrode includes a current collector, a first active material layer formed on a first surface of the current collector, and a second active material layer formed on a second surface opposite to the first surface of the current collector, at least one of the first active material layer and the second active material layer may include a first pattern portion and a second pattern portion, which may be alternately arranged in a longitudinal direction of the current collector, the second pattern portion may include an active material with a higher swelling rate during charging than an active material in the first pattern portion, and the second pattern portion may be thinner than the first pattern portion.

In some embodiments, the first pattern portion may include a graphite material.

In some embodiments, the second pattern portion may include a silicon material.

In some embodiments, the second pattern portion may include a graphite material and a silicon material.

In some embodiments, a thickness of the second pattern portion may be set based on the silicon material content.

In some embodiments, the thickness of the second pattern portion may be set to a thickness for allowing a maximum thickness of the second pattern portion swelled during charging to correspond to a maximum thickness of the first pattern portion swelled during charging.

In some embodiments, the plurality of second pattern portions gradually become thicker in the longitudinal direction of the current collector.

In some embodiments, the plurality of second pattern portions gradually increase in width in the longitudinal direction of the current collector.

In some embodiments, the first active material layer may include a first sub-pattern portion and a second sub-pattern portion, which may be alternately arranged in the longitudinal direction of the current collector, and the second active material layer may include a third sub-pattern portion and a fourth sub-pattern portion, which may be alternately arranged in the longitudinal direction of the current collector.

In some embodiments, the second sub-pattern portion may be thicker than the fourth sub-pattern portion.

In some embodiments, a width of the second sub-pattern portion may be larger than a width of the fourth sub-pattern portion.

In some embodiments, the second pattern portion may include a first pattern layer formed on the current collector, and a second pattern layer formed on the first pattern layer and including an active material with a high swelling rate during charging.

In some embodiments, the first pattern layer may include a graphite material, and the second pattern layer may include a silicon material.

In some embodiments, the first pattern layer may include a graphite material, and the second pattern layer may include a graphite material and a silicon material.

In some embodiments, the second sub-pattern portion may include a first sub-pattern layer formed on the first surface of the current collector, and a second sub-pattern layer formed on the first sub-pattern layer and including an active material with a high swelling rate during charging, and the fourth sub-pattern portion may include a third sub-pattern layer formed on the second surface of the current collector, and a fourth sub-pattern layer formed on the third sub-pattern layer and including an active material with a high swelling rate during charging.

In some embodiments, the first sub-pattern layer and the third sub-pattern layer may have the same thickness, and the second sub-pattern layer may be thicker than the fourth sub-pattern layer.

In some embodiments, the second sub-pattern layer and the fourth sub-pattern layer may have the same thickness, and the first sub-pattern layer may be thicker than the third sub-pattern layer.

In some embodiments, the first pattern portion may be formed in a waveform in the longitudinal direction of the current collector, and the second pattern portion may be formed in a valley region of the first pattern portion.

In some embodiments, the first active material layer may include a first sub-pattern portion formed in a waveform in the longitudinal direction of the current collector and a second sub-pattern portion formed in a valley region of the first sub-pattern portion, the second active material layer may include a third sub-pattern portion formed in a waveform in the longitudinal direction of the current collector and a fourth sub-pattern portion formed in a valley region of the third sub-pattern portion, and a belly region of the first sub-pattern portion faces the valley region of the third sub-pattern portion.

According to the invention, a secondary battery may include an electrode assembly including a first electrode, a separator, and a second electrode, a case accommodating the electrode assembly and electrically connected to the second electrode, and a cap assembly closing an opening of the case and electrically connected to the first electrode, the second electrode may include a current collector, a first active material layer formed on a first surface of the current collector, and a second active material layer formed on a second surface opposite to the first surface of the current collector, at least one of the first active material layer and the second active material layer may include a first pattern portion and a second pattern portion, which may be alternately arranged in a longitudinal direction of the current collector, the second pattern portion may include an active material with a higher swelling rate during charging than an active material in the first pattern portion, and the second pattern portion may be thinner than the first pattern portion.

According to some embodiments, an active material layer of an electrode for a secondary battery may be formed to include a first pattern portion without a silicon material and a second pattern portion with a silicon material, and the second pattern portion may be formed thinner than the first pattern portion, thereby preventing the electrode from excessively swelling during charging and discharging of the secondary battery.

According to some embodiments, an active material layer as a negative electrode with a high swelling rate during charging and discharging of a secondary battery may be formed to include a first pattern portion without a silicon material and a second pattern portion with a silicon material, and the second pattern portion may be formed thinner than the first pattern portion, thereby allowing the negative electrode to swell less during charging and discharging of the secondary battery.

### BRIEF DESCRIPTION OF THE DRAWINGS

The following drawings attached to this specification illustrate embodiments of the present invention, and further describe aspects and features of the present invention together with the detailed description of the present invention. Thus, the present invention should not be construed as being limited to the drawings:
FIG. 1 is a cross-sectional view of an example of an electrode according to an embodiment of the present invention;
FIG. 2 is a cross-sectional view of an enlarged portion of FIG. 1, illustrating a pattern portion of an electrode according to an embodiment of the present invention;
FIG. 3 is a cross-sectional view of an example of how the electrode in FIG. 2 of the present invention expands during charging and discharging;
FIG. 4 is a cross-sectional view of an example of how a plurality of second pattern portions of an electrode according to an embodiment of the present invention gradually become thicker in the longitudinal direction of the current collector;
FIG. 5 is a cross-sectional view of an example of how a width of the plurality of second pattern portions of an electrode according to an embodiment of the present invention gradually increases in the longitudinal direction of the current collector;
FIG. 6 is a cross-sectional view of an example of an electrode according to another embodiment of the present invention;
FIG. 7 is a cross-sectional view of a size of a pattern portion of an electrode according to another embodiment of the present invention;
FIG. 8 is a cross-sectional view of an example of how a thicknesses of pattern portions formed on their respective sides of the current collector of an electrode according to another embodiment of the present invention are different;
FIG. 9 is a cross-sectional view of an example of how widths of pattern portions formed on their respective sides of the current collector of an electrode according to another embodiment of the present invention are different;
FIG. 10 is a cross-sectional view of an example of an electrode according to still another embodiment of the present invention;
FIG. 11 is a cross-sectional view of a size of a pattern portion of an electrode according to still another embodiment of the present invention;
FIG. 12 is a cross-sectional view of an example of how a plurality of second pattern portions of an electrode according to still another embodiment of the present invention gradually become thicker in a longitudinal direction of the current collector;
FIG. 13 is a cross-sectional view of an example of how a width of the plurality of second pattern portions of an electrode according to still another embodiment of the present invention gradually increases in the longitudinal direction of the current collector;
FIG. 14 is a cross-sectional view of an example of an electrode according to yet another embodiment of the present invention;
FIG. 15 is a cross-sectional view of a size of a pattern portion of an electrode according to yet another embodiment of the present invention;
FIGS. 16 and 17 are cross-sectional views of examples of how thicknesses of pattern portions formed on their respective sides of the current collector of an electrode according to yet another embodiment of the present invention are different;
FIG. 18 is a cross-sectional view of an example of how widths of pattern portions formed on their respective sides of the current collector of an electrode according to yet another embodiment of the present invention are different;
FIG. 19 is a cross-sectional view of an example of an electrode according to still another embodiment of the present invention;
FIG. 20 is a cross-sectional view of an example of an electrode according to yet another embodiment of the present invention;
FIG. 21 is a cross-sectional view of an example of an electrode according to yet another embodiment of the present invention; and
FIG. 22 is a cross-sectional view for showing an example of a secondary battery according to some embodiments of the present invention.

### DETAILED DESCRIPTION

Hereinafter, embodiments of the present invention will be described, in detail, with reference to the accompanying drawings. The terms or words used in the present specification and claims are not to be limitedly interpreted as general or dictionary meanings and should be interpreted as meanings and concepts that are consistent with the technical idea of the present invention on the basis of the principle that an inventor can be his/her own lexicographer to appropriately define concepts of terms to describe his/her invention in the best way.

The embodiments described in this specification and the configurations shown in the drawings are only some of the embodiments of the present invention and do not represent all of the technical spirit, aspects, and features of the present invention. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (or under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

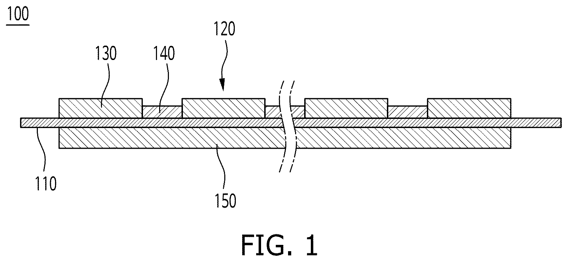

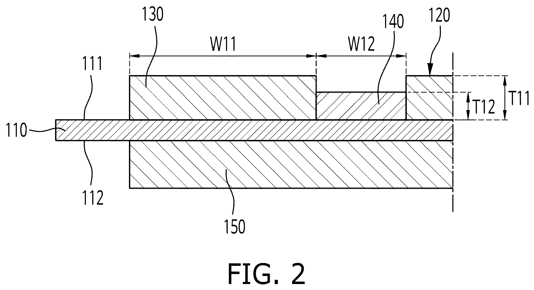

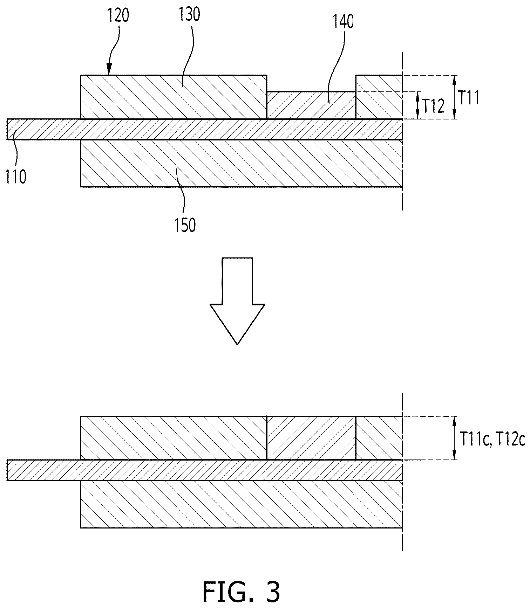

FIG. 1 is a cross-sectional view for showing an example of an electrode according to an embodiment of the present invention, and FIG. 2 is a cross-sectional view for showing the size of a pattern portion of the electrode according to an embodiment of the present invention. FIG. 3 is a cross-sectional view for showing an example of how the electrode according to an embodiment of the present invention expands during charging and discharging.

Referring to FIGS. 1 to 3, an electrode 100 according to an embodiment of the present invention may include a current collector 110 made of a metal material, a first active material layer 120 formed on a first surface 111 of the current collector 110, and a second active material layer 150 formed on a second surface 112 opposite to the first surface 111 of the current collector 110. The first active material layer 120 may include a first pattern portion 130 and a second pattern portion 140, which are alternately arranged in a longitudinal direction of the current collector 110. The second pattern portion 140 may contain an active material swelling more during charging than an active material included in the first pattern portion 130. The current collector 110 may be formed of a metal foil such as copper, a copper alloy, nickel, and a nickel alloy.

When lithium ions of a secondary battery are intercalated during charging, the first pattern portion 130 may include an active material that swells less per unit volume, and the second pattern portion 140 may include an active material that swells more per unit volume. In some embodiments, the first pattern portion 130 may include a graphite material (e.g., only a graphite material), and the second pattern portion 140 may include a silicon material. In other embodiments, the first pattern portion 130 may include a graphite material, and the second pattern portion 140 may include a graphite material and a silicon material. That is, the second pattern portion 140 may be formed of a silicon material or a mixture of a graphite material and a silicon material.

Because a silicon material swells more per unit volume than a graphite material during charging, the second pattern portion 140 including the silicon material may swell more than the first pattern portion 130 during charging. Accordingly, this may be compensated for by forming the second pattern portion 140 with a thickness T12 that is smaller than a thickness T11 of the first pattern portion 130 (e.g., measured from the first surface 111 of the current collector 110). That is, the thickness T12 of the second pattern portion 140 may be set based on the silicon material content. In some embodiments, the thickness T12 of the second pattern portion 140 may be set to a thickness for allowing a maximum thickness T12c of the second pattern portion 140 swelled during charging to correspond to (e.g., equal) a maximum thickness T11c of the first pattern portion 130 swelled during charging (e.g., the maximum thickness T12c during charging may extend to be level (or coplanar) with the maximum thickness T11c during charging). The swelling level changes depending on the silicon material content can be measured through analytical data or various experimental data.

Referring to FIG. 2, a width W12 of the second pattern portion 140 may be smaller than a width W11 of the first pattern portion 130 (e.g., as measured along a direction parallel to the first surface 111 of the current collector 110 and along an alternating arrangement direction of the first and second pattern portions 130 and 140). In some embodiments, the width W12 of the second pattern portion 140 may be equal to or larger than the width W11 of the first pattern portion 130.

The active material layer may contain an active material and may further contain a binder and/or a conductive material. In some embodiments, the active material layer may contain 90 wt % to 99 wt % of the active material, 0.5 wt % to 5 wt % of the binder, and 0 wt % to 5 wt % of the conductive material.

A non-aqueous binder, an aqueous binder, a dry binder, or a combination thereof may be used as the binder. When an aqueous binder is used as the binder, a cellulose compound capable of imparting viscosity may be further included.

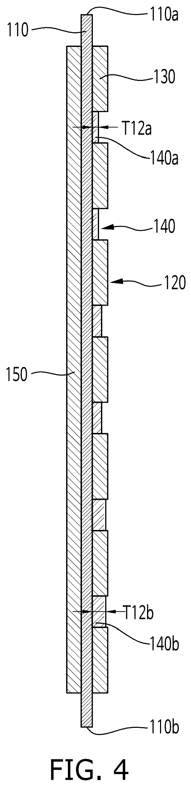

FIG. 4 is a cross-sectional view for showing an example of how a plurality of second pattern portions of the electrode according to an embodiment of the present invention gradually become thicker in the longitudinal direction of the current collector.

Referring to FIG. 4, the first active material layer 120 may include a plurality of first pattern portions 130 and a plurality of second pattern portions 140, and the plurality of first pattern portions 130 and the plurality of second pattern portions 140 may be arranged alternately in the longitudinal direction of the current collector 110. The plurality of second pattern portions 140 may gradually become thicker in the longitudinal direction of the current collector 110.

In some embodiments, the second pattern portion 140 may become thicker in a direction from one end 110a of the current collector 110 to the other end 110b. That is, a thickness T12a of a second pattern portion 140a close to the one end 110a of the current collector 110 may be the smallest of the second pattern portions 140, and a thickness T12b of a second pattern portion 140b close to the other end 110b of the current collector 110 may be the largest of the second pattern portions 140.

In some embodiments, when the electrode is wound, the second active material layer 150 may be placed on the radially inner side, and the first active material layer 120 may be arranged on the radially outer side. The one end 110a of the current collector 110 may correspond to the front end of the wound electrode, and the other end 110b of the current collector 110 may correspond to the rear end of the wound electrode.

When the active material layer swells during charging of the secondary battery, a compressive force may be applied to the second active material layer 150 positioned on the inner side of the radius of curvature of the wound electrode, and a tensile force may be applied to the first active material layer 120 disposed on the outer side of the radius of curvature thereof. Even when a tensile force is applied to the first active material layer 120 including the second pattern portion 140 that swells more, the length of a stretched portion may be compensated for by the second pattern portion 140 that swells more.

Because the radius of curvature of the rear end of the wound electrode, which is the other end 110b of the current collector 110, may be larger than that of the front end of the wound electrode, which is the one end 110a of the current collector 110, a stronger tensile force may be applied to the rear end of the wound electrode, which is the other end 110b of the current collector 110. The second pattern portion 140 may become thicker in a direction from the front end of the wound electrode, which is the one end 110a of the current collector 110, to the rear end of the wound electrode, which is the other end 110b of the current collector 110. The content of the active material with a higher swelling rate increases as the second pattern portion 140 becomes thicker, so that the length of a stretched portion may be compensated for.

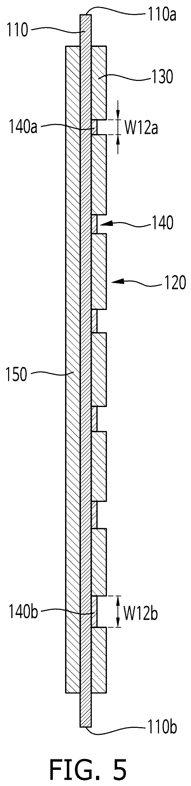

FIG. 5 is a cross-sectional view for showing an example of how the width of the plurality of second pattern portions of the electrode according to an embodiment of the present invention gradually increases in the longitudinal direction of the current collector.

Referring to FIG. 5, the first active material layer 120 may include the plurality of first pattern portions 130 and the plurality of second pattern portions 140, and the plurality of first pattern portions 130 and the plurality of second pattern portions 140 may be alternately arranged in the longitudinal direction of the current collector 110. The width of the plurality of second pattern portions 140 may gradually increase in the longitudinal direction of the current collector 110.

In some embodiments, the width of the second pattern portion 140 may increase in a direction from the one end 110a of the current collector 110 to the other end 110b. That is, a width W12a of the second pattern portion 140a close to the one end 110a of the current collector 110 may be the smallest of second pattern portions 140, and a width W12b of the second pattern portion 140b close to the other end 110b of the current collector 110 may be the largest of second pattern portions 140.

In some embodiments, when the electrode is wound, the second active material layer 150 may be placed on the radially inner side, and the first active material layer 120 may be arranged on the radially outer side. The one end 110a of the current collector 110 may correspond to the front end of the wound electrode, and the other end 110b of the current collector 110 may correspond to the rear end of the wound electrode.

When the active material layer swells during charging of the secondary battery, a compressive force may be applied to the second active material layer 150 positioned on the inner side of the radius of curvature of the wound electrode, and a tensile force may be applied to the first active material layer 120 disposed on the outer side of the radius of curvature thereof. Even when a tensile force is applied to the first active material layer 120 including the second pattern portion 140 that swells more, the length of a stretched portion may be compensated for by the second pattern portion 140 that swells more.

Because the radius of curvature of the rear end of the wound electrode, which is the other end 110b of the current collector 110, may be larger than that of the front end of the wound electrode, which is the one end 110a of the current collector 110, a stronger tensile force may be applied to the rear end of the wound electrode, which is the other end 110b of the current collector 110. The width of the second pattern portion 140 may increase in a direction from the front end of the wound electrode, which is the one end 110a of the current collector 110, to the rear end of the wound electrode, which is the other end 110b of the current collector 110. The content of the active material with a higher swelling rate increases as the width of the second pattern portion 140 increases, so that the length of a stretched portion may be compensated for.

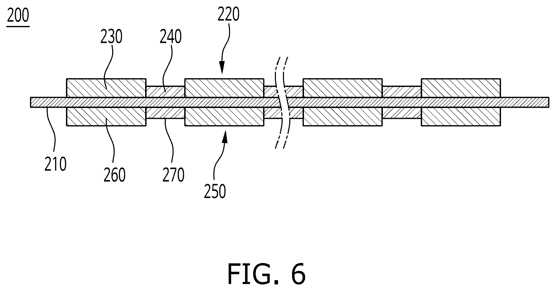

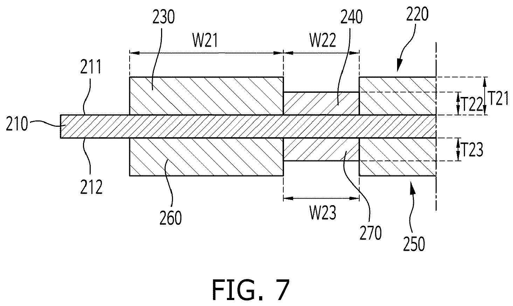

FIG. 6 is a cross-sectional view for showing an example of an electrode according to another embodiment of the present invention, and FIG. 7 is a cross-sectional view for showing the size of a pattern portion of the electrode in FIG. 6.

Referring to FIGS. 6 and 7, an electrode 200 according to the another embodiment of the present invention may include a current collector 210 made of a metal material, a first active material layer 220 formed on a first surface 211 of the current collector 210, and a second active material layer 250 formed on a second surface 212 opposite to the first surface 211 of the current collector 210. The first active material layer 220 may include a first sub-pattern portion 230 and a second sub-pattern portion 240, which are alternately arranged in a longitudinal direction of the current collector 210, and the second active material layer 250 may include a third sub-pattern portion 260 and a fourth sub-pattern portion 270, which are alternately arranged in the longitudinal direction of the current collector 210.

The second sub-pattern portion 240 may contain an active material with a higher swelling rate during charging than an active material included in the first sub-pattern portion 230, and the fourth sub-pattern portion 270 may contain an active material with a higher swelling rate during charging than an active material included in the third sub-pattern portion 260. The current collector 210 may be formed of a metal foil such as copper, a copper alloy, nickel, and a nickel alloy.

In some embodiments, the first sub-pattern portion 230 and the third sub-pattern portion 260 may contain a graphite material, and the second sub-pattern portion 240 and fourth sub-pattern portion 270 may contain a silicon material. In other embodiments, the first sub-pattern portion 230 and the third sub-pattern portion 260 may contain a graphite material (e.g., only graphite material), and the second sub-pattern portion 240 and the fourth sub-pattern portion 270 may contain a graphite material and a silicon material. That is, the second sub-pattern portion 240 and the fourth sub-pattern portion 270 may be formed of a silicon material or a mixture of a graphite material and a silicon material. Accordingly, the electrode 200 according to the second embodiment of the present invention may include a pattern portion containing a silicon material on each of the first active material layer 220 and the second active material layer 250 formed on their respective sides of the current collector 210.

In some embodiments, a thickness T22 of the second sub-pattern portion 240 may be smaller than a thickness T21 of the first sub-pattern portion 230. A width W22 of the second sub-pattern portion 240 may be smaller than a width W21 of the first sub-pattern portion 230. The thickness and the width of the third sub-pattern portion 260 may be equal to the thickness T21 and the width W21 of the first sub-pattern portion 230, and a thickness T23 and a width W23 of the fourth sub-pattern portion 270 may be equal to the thickness T22 and the width W22 of the second sub-pattern portion 240.

For example, referring to FIG. 6, the second sub-pattern portion 240 on the first active material layer 220 may be at a position opposite to the position of the fourth sub-pattern portion 270 on the second active material layer 250 (e.g., the second sub-pattern portion 240 and the fourth sub-pattern portion 270 may overlap each other). In another example, the first sub-pattern portion 230 may be at a position opposite to the position of the fourth sub-pattern portion 270.

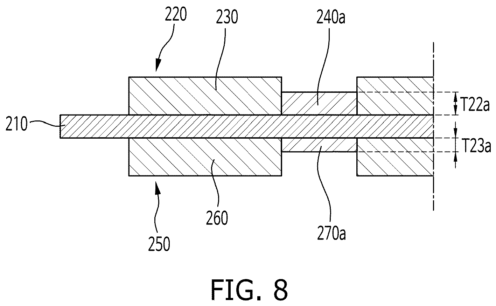

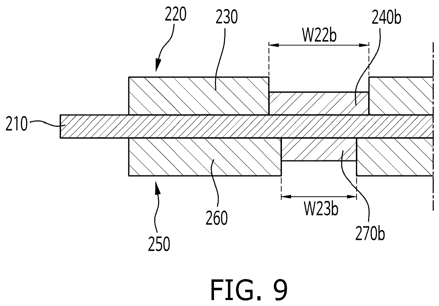

FIG. 8 is a cross-sectional view for showing an example of how the thicknesses of pattern portions formed on their respective sides of the current collector of the electrode according to another embodiment of the present invention are different, and FIG. 9 is a cross-sectional view for showing an example of how the widths of pattern portions formed on their respective sides of the current collector of the electrode according to another embodiment of the present invention are different.

The size of the pattern portion of the first active material layer 220 may be different from the size of the pattern portion of the second active material layer 250.

In some embodiments, referring to FIG. 8, a thickness T22a of a second sub-pattern portion 240a of the first active material layer 220 may be larger than a thickness T23a of a fourth sub-pattern portion 270a of the second active material layer 250. In some embodiments, the opposite may also be true. The width of the second sub-pattern portion 240a may be equal to the width of the fourth sub-pattern portion 270a, and the size of the first sub-pattern portion 230 of the first active material layer 220 may be equal to the size of the third sub-pattern portion 260 of the second active material layer 250.

When the electrode is wound with such features, the second active material layer 250 may be arranged on the radially inner side, and the first active material layer 220 may be placed on the radially outer side. That is, the second sub-pattern portion 240a, which is thicker, may be disposed on the radially outer side, and the fourth sub-pattern portion 270a, which is thinner, may be positioned on the radially inner side.

In some embodiments, referring to FIG. 9, a width W22b of a second sub-pattern portion 240b of the first active material layer 220 may be larger than a width W23b of a fourth sub-pattern portion 270b of the second active material layer 250. In some embodiments, the opposite may also be true. The thickness of the second sub-pattern portion 240b may be equal to the thickness of the fourth sub-pattern portion 270b, and the size of the first sub-pattern portion 230 of the first active material layer 220 may be equal to the size of the third sub-pattern portion 260 of the second active material layer 250.

When the electrode is wound with such features, the second active material layer 250 may be arranged on the radially inner side, and the first active material layer 220 may be placed on the radially outer side. That is, the second sub-pattern portion 240b, which is wider, may be disposed on the radially outer side, and the fourth sub-pattern portion 270b, which is narrower, may be positioned on the radially inner side.

In some embodiments, both the thickness and the width of the second sub-pattern portion of the first active material layer 220 may be different from those of the fourth sub-pattern portion of the second active material layer 250.

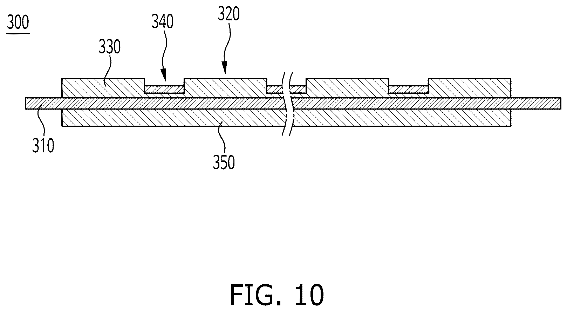

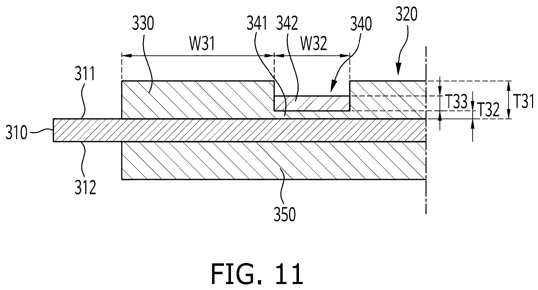

FIG. 10 is a cross-sectional view for showing an example of an electrode according to still another embodiment of the present invention, and FIG. 11 is a cross-sectional view for showing the size of a pattern portion of the electrode in FIG. 10.

Referring to FIGS. 10 and 11, an electrode 300 according to still another embodiment of the present invention may include a current collector 310 made of a metal material, a first active material layer 320 formed on a first surface 311 of the current collector 310, and a second active material layer 350 formed on a second surface 312 opposite to the first surface 311 of the current collector 310. The first active material layer 320 may include a first pattern portion 330 and a second pattern portion 340, which are alternately arranged in a longitudinal direction of the current collector 310. The second pattern portion 340 may contain an active material swelling more during charging than an active material included in the first pattern portion 330. The current collector 310 may be formed of a metal foil such as copper, a copper alloy, nickel, and a nickel alloy.

In some embodiments, the first pattern portion 330 may contain a graphite material, and the second pattern portion 340 may contain a silicon material. In other embodiments, the first pattern portion 330 may contain a graphite material, and the second pattern portion 340 may contain a graphite material and a silicon material. That is, the second pattern portion 340 may be formed of a silicon material or a mixture of a graphite material and a silicon material.

The second pattern portion 340 of the first active material layer 320 may include a first pattern layer 341 formed on the current collector 310 and a second pattern layer 342 formed on the first pattern layer 341 and including an active material with a high swelling rate during charging (e.g., the first and second pattern layers 341 and 342 may be stacked on the first surface 311, with the first pattern layer 341 being between the first surface 311 and the second pattern layer 342). In some embodiments, the first pattern layer 341 may contain a graphite material, and the second pattern layer 342 may contain a silicon material (e.g., the first pattern layer 341 may include a same material as the first pattern portion 330). In other embodiments, the first pattern layer 341 may contain a graphite material, and the second pattern layer 342 may contain a graphite material and a silicon material. That is, the second pattern layer 342 may be formed of a silicon material or a mixture of a graphite material and a silicon material.

The thickness of the second pattern portion 340 of the first active material layer 320 may be smaller than a thickness T31 of the first pattern portion 330. That is, the sum of a thickness T32 of the first pattern layer 341 and a thickness T33 of the second pattern layer 342 may be smaller than the thickness T31 of the first pattern portion 330.

A width W32 of the second pattern portion 340 may be smaller than a width W31 of the first pattern portion 330. In some embodiments, the width W32 of the second pattern portion 340 may be equal to or larger than the width W31 of the first pattern portion 330.

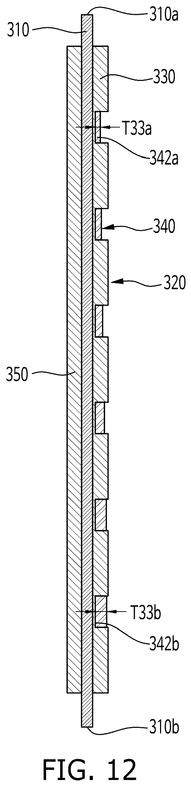

FIG. 12 is a cross-sectional view for showing an example of how a plurality of second pattern portions of the electrode according to still another embodiment of the present invention gradually become thicker in a longitudinal direction of the current collector.

Referring to FIG. 12, the first active material layer 320 may include a plurality of first pattern portions 330 and a plurality of second pattern portions 340, which may be alternately arranged in the longitudinal direction of the current collector 310. The plurality of second pattern portions 340 may gradually become thicker in the longitudinal direction of the current collector 310.

In some embodiments, the first pattern layer of the second pattern portion 340 may have a constant thickness, and the thickness of the second pattern layer may increase. The second pattern layer may become thicker in a direction from one end 310a of the current collector 310 to the other end 310b. That is, a thickness T33a of a second pattern layer 342a of the second pattern portion 340 close to the one end 310a of the current collector 310 may be the smallest of the second pattern layers 342, and a thickness T33b of a second pattern layer 342b of the second pattern portion 340 close to the other end 310b of the current collector 310 may be the largest of the second pattern layers 342.

In some embodiments, when the electrode is wound, the second active material layer 350 may be arranged on the radially inner side, and the first active material layer 320 may be placed on the radially outer side. The one end 310a of the current collector 310 may correspond to the front end of the wound electrode, and the other end 310b of the current collector 310 may correspond to the rear end of the wound electrode.

When, with such features, the active material layer swells while the secondary battery is being charged, a compressive force may be applied to the second active material layer 350 arranged on the inner side of the radius of curvature of the wound electrode, and a tensile force may be applied to the first active material layer 320 placed on the outer side of the radius of curvature. Even when a tensile force is applied to the first active material layer 320 including the second pattern portion 340 that swells more, the length of a stretched portion may be compensated for by the second pattern portion 340 that swells more.

Because the radius of curvature of the rear end of the wound electrode, which is the other end 310b of the current collector 310, may be larger than that of the front end of the wound electrode, which is the one end 310a of the current collector 310, a stronger tensile force may be applied to the rear end of the wound electrode, which is the other end 310b of the current collector 310. The second pattern layer of the second pattern portion 340 may become thicker in a direction from the front end of the wound electrode, which is the one end 310a of the current collector 310, to the rear end of the wound electrode, which is the other end 310b of the current collector 310. The content of the active material with a higher swelling rate increases as the second pattern layer of the second pattern portion 340 becomes thicker, so that the length of a stretched portion may be compensated for.

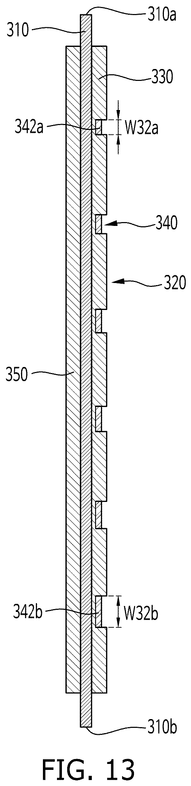

FIG. 13 is a cross-sectional view for showing an example of how the width of the plurality of second pattern portions of the electrode according to the still another embodiment of the present invention gradually increases in the longitudinal direction of the current collector.

Referring to FIG. 13, the first active material layer 320 may include the plurality of first pattern portions 330 and the plurality of second pattern portions 340, which are alternately arranged in the longitudinal direction of the current collector 310. The width of the plurality of second pattern portions 340 may gradually increase in the longitudinal direction of the current collector 310.

In some embodiments, the width of the second pattern portion 340 may increase in a direction from the one end 310a of the current collector 310 to the other end 310b. That is, a width W32a of the second pattern portion close to the one end 310a of the current collector 310 may be the smallest, and a width W32b of the second pattern portion close to the other end 310b of the current collector 310 may be the largest. Therefore, the width W32a of the second pattern layer 342a of the second pattern portion close to the one end 310a of the current collector 310 may be the smallest of the second pattern layers 342, and the width W32b of the second pattern layer 342b of the second pattern portion close to the other end 310b of the current collector 310 may be the largest of the second pattern layers 342.

In some embodiments, when the electrode is wound, the second active material layer 350 may be placed on the radially inner side, and the first active material layer 320 may be arranged on the radially outer side. The one end 310a of the current collector 310 may correspond to the front end of the wound electrode, and the other end 310b of the current collector 310 may correspond to the rear end of the wound electrode.

When the active material layer swells during charging of the secondary battery, a compressive force may be applied to the second active material layer 350 positioned on the inner side of the radius of curvature of the wound electrode, and a tensile force may be applied to the first active material layer 320 disposed on the outer side of the radius of curvature thereof. Even when a tensile force is applied to the first active material layer 320 including the second pattern portion 340 that swells more, the length of a stretched portion may be compensated for by the second pattern portion 340 that swells more.

Because the radius of curvature of the rear end of the wound electrode, which is the other end 310b of the current collector 310, may be larger than that of the front end of the wound electrode, which is the one end 310a of the current collector 310, a stronger tensile force may be applied to the rear end of the wound electrode, which is the other end 310b of the current collector 310. The width of the second pattern portion 340 may increase in a direction from the front end of the wound electrode, which is the one end 310a of the current collector 310, to the rear end of the wound electrode, which is the other end 310b of the current collector 310. The width of the second pattern layer may increase as the width of the second pattern portion 340 increases, so that the content of the active material with a higher swelling rate may increase, compensating for the length of a stretched portion.

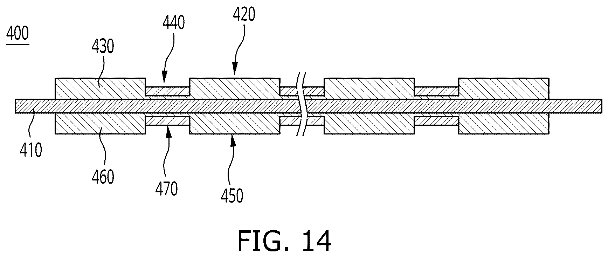

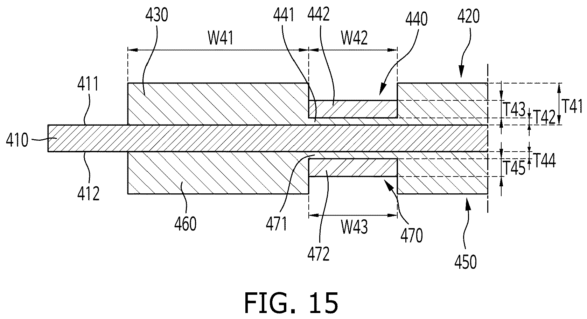

FIG. 14 is a cross-sectional view for showing an example of an electrode according to yet another embodiment of the present invention, and FIG. 15 is a cross-sectional view for showing the size of a pattern portion of the electrode in FIG. 14.

Referring to FIGS. 14 and 15, an electrode 400 according to yet another embodiment of the present invention may include a current collector 410 made of a metal material, a first active material layer 420 formed on a first surface 411 of the current collector 410, and a second active material layer 450 formed on a second surface 412 opposite to the first surface 411 of the current collector 410.

The first active material layer 420 may include a first sub-pattern portion 430 and a second sub-pattern portion 440, which are alternately arranged in a longitudinal direction of the current collector 410, and the second active material layer 450 may include a third sub-pattern portion 460 and a fourth sub-pattern portion 470, which are alternately arranged in the longitudinal direction of the current collector 410.

The second sub-pattern portion 440 may contain an active material with a higher swelling rate during charging than an active material included in the first sub-pattern portion 430, and the fourth sub-pattern portion 470 may contain an active material with a higher swelling rate during charging than an active material included in the third sub-pattern portion 460. The current collector 410 may be formed of a metal foil such as copper, a copper alloy, nickel, and a nickel alloy.

In some embodiments, the first sub-pattern portion 430 and the third sub-pattern portion 460 may contain a graphite material, and the second sub-pattern portion 440 and the fourth sub-pattern portion 470 may contain a silicon material. In other embodiments, the first sub-pattern portion 430 and the third sub-pattern portion 460 may contain a graphite material, and the second sub-pattern portion 440 and the fourth sub-pattern portion 470 may contain a graphite material and a silicon material. That is, the second sub-pattern portion 440 and the fourth sub-pattern portion 470 may be formed of a silicon material or a mixture of a graphite material and a silicon material. Accordingly, the electrode 400 according to the yet another embodiment of the present invention may include a pattern portion containing a silicon material on each of the first active material layer 420 and the second active material layer 450 formed on their respective sides of the current collector 410.

The second sub-pattern portion 440 of the first active material layer 420 may include a first pattern layer 441 formed on the current collector 410 and a second pattern layer 442 formed on the first pattern layer 441 and including an active material swelling more during charging. In some embodiments, the first pattern layer 441 may include a graphite material, and the second pattern layer 442 may include a silicon material. In other embodiments, the first pattern layer 441 may include a graphite material, and the second pattern layer 442 may include a graphite material and a silicon material. That is, the second pattern layer 442 may be formed of a silicon material or a mixture of a graphite material and a silicon material.

The fourth sub-pattern portion 470 of the second active material layer 450 may include a third pattern layer 471 formed on the current collector 410 and a fourth pattern layer 472 formed on the third pattern layer 471 and including an active material swelling more during charging. In some embodiments, the third pattern layer 471 may include a graphite material, and the fourth pattern layer 472 may include a silicon material. In other embodiments, the third pattern layer 471 may include a graphite material, and the fourth pattern layer 472 may include a graphite material and a silicon material. That is, the fourth pattern layer 472 may be formed of a silicon material or a mixture of a graphite material and a silicon material.

The thickness of the second sub-pattern portion 440 of the first active material layer 420 may be smaller than a thickness T41 of the first sub-pattern portion 430. That is, the sum of a thickness T42 of the first pattern layer 441 and a thickness T43 of the second pattern layer 442 may be smaller than the thickness T41 of the first sub-pattern portion 430.

A width W42 of the second sub-pattern portion 440 may be smaller than a width W41 of the first sub-pattern portion 430. In some embodiments, the width W42 of the second sub-pattern portion 440 may be equal to or larger than the width W41 of the first sub-pattern portion 430.

Furthermore, the thickness and the width of the third sub-pattern portion 460 may be equal to the thickness T41 and the width W41 of the first sub-pattern portion 430, and the thickness and a width W43 of the fourth sub-pattern portion 470 may be equal to the thickness and the width W42 of the second sub-pattern portion 440. In some embodiments, the thickness T42 of the first pattern layer 441 may be equal to a thickness T44 of the third pattern layer 471, and the thickness T43 of the second pattern layer 442 may be equal to a thickness T45 of the fourth pattern layer 472.

For example, referring to FIG. 14, the second sub-pattern portion 440 on the first active material layer 420 may be at a position opposite to the position of the fourth sub-pattern portion 470 on the second active material layer 450. In another example, the first sub-pattern portion 430 may be at a position opposite to the position of the fourth sub-pattern portion 470.

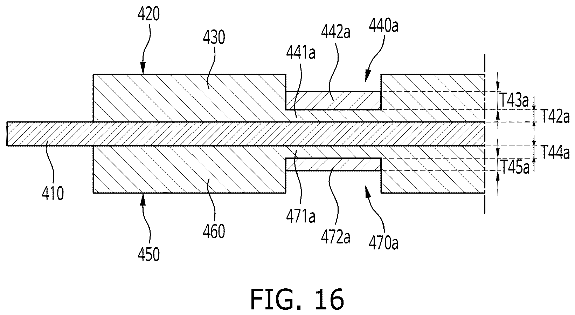

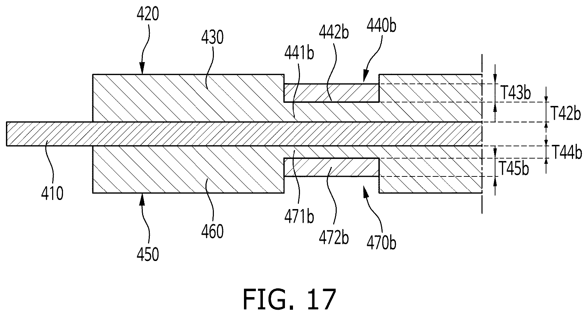

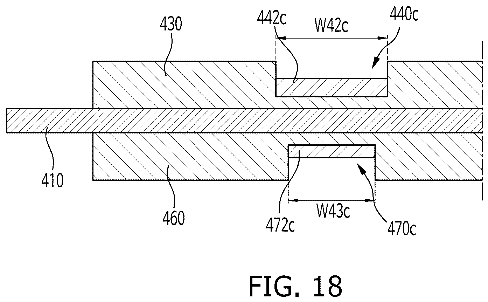

FIGS. 16 and 17 are cross-sectional views for showing examples of how the thicknesses of pattern portions formed on their respective sides of the current collector of the electrode according to the yet another embodiment of the present invention are different, and FIG. 18 is a cross-sectional view for showing an example of how the widths of pattern portions formed on their respective sides of the current collector of the electrode according to the yet another embodiment of the present invention are different.

The size of the pattern portion of the first active material layer 420 may be different from the size of the pattern portion of the second active material layer 450.

Referring to FIG. 16, a second sub-pattern portion 440a of the first active material layer 420 may be thicker than a fourth sub-pattern portion 470a of the second active material layer 450. In some embodiments, a thickness T42a of a first pattern layer 441a of the second sub-pattern portion 440a may be equal to a thickness T44a of a third pattern layer 471a of the fourth sub-pattern portion 470a, and a thickness T43a of a second pattern layer 442a of the second sub-pattern portion 440a may be larger than a thickness T45a of a fourth pattern layer 472a of the fourth sub-pattern portion 470a.

The width of the second sub-pattern portion 440a may be equal to the width of the fourth sub-pattern portion 470a, and the size of the first sub-pattern portion 430 of the first active material layer 420 may be equal to the size of the third sub-pattern portion 460 of the second active material layer 450.

When the electrode is wound with such features, the second active material layer 450 may be arranged on the radially inner side, and the first active material layer 420 may be placed on the radially outer side. That is, the second sub-pattern portion 440a, which is thicker, may be disposed on the radially outer side, and the fourth sub-pattern portion 470a, which is thinner, may be positioned on the radially inner side.

In some embodiments, referring to FIG. 17, a second sub-pattern portion 440b of the first active material layer 420 may be thicker than a fourth sub-pattern portion 470b of the second active material layer 450. In some embodiments, a thickness T42b of a first pattern layer 441b of the second sub-pattern portion 440b may be larger than a thickness T44b of a third pattern layer 471b of the fourth sub-pattern portion 470b, and a thickness T43b of a second pattern layer 442b of the second sub-pattern portion 440b may be equal to a thickness T45b of a fourth pattern layer 472b of the fourth sub-pattern portion 470b.

The width of the second sub-pattern portion 440b may be equal to the width of the fourth sub-pattern portion 470b, and the size of the first sub-pattern portion 430 of the first active material layer 420 may be equal to the size of the third sub-pattern portion 460 of the second active material layer 450.

When the electrode is wound with such features, the second active material layer 450 may be arranged on the radially inner side, and the first active material layer 420 may be placed on the radially outer side. That is, the second sub-pattern portion 440b, which is thicker, may be disposed on the radially outer side, and the fourth sub-pattern portion 470b, which is thinner, may be positioned on the radially inner side.

In some embodiments, referring to FIG. 18, a width W42c of a second sub-pattern portion 440c of the first active material layer 420 may be larger than a width W43c of a fourth sub-pattern portion 470c of the second active material layer 450. That is, the width W42c of a second pattern layer 442c of the second sub-pattern portion 440c may be larger than the width W43c of a fourth pattern layer 472c of the fourth sub-pattern portion 470c. The thickness of the second sub-pattern portion 440c may be equal to the thickness of the fourth sub-pattern portion 470c, and the size of the first sub-pattern portion 430 of the first active material layer 420 may be equal to the size of the third sub-pattern portion 460 of the second active material layer 450.

When the electrode is wound with such features, the second active material layer 450 may be arranged on the radially inner side, and the first active material layer 420 may be placed on the radially outer side. That is, the second sub-pattern portion 440c, which is wider, may be disposed on the radially outer side of the wound electrode, and the fourth sub-pattern portion 470c, which is narrower, may be positioned on the radially inner side of the wound electrode.

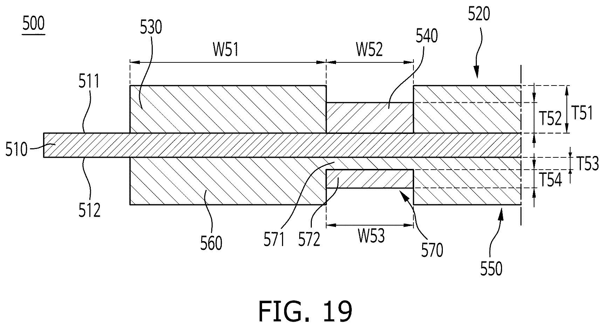

FIG. 19 is a cross-sectional view for showing an example of an electrode according to still another embodiment of the present invention.

Referring to FIG. 19, an electrode 500 according to still another embodiment of the present invention may include a current collector 510 made of a metal material, a first active material layer 520 formed on a first surface 511 of the current collector 510, and a second active material layer 550 formed on a second surface 512 opposite to the first surface 511 of the current collector 510.

The first active material layer 520 may include a first sub-pattern portion 530 and a second sub-pattern portion 540, which are alternately arranged in a longitudinal direction of the current collector 510, and the second active material layer 550 may include a third sub-pattern portion 560 and a fourth sub-pattern portion 570, which are alternately arranged in the longitudinal direction of the current collector 510.

The second sub-pattern portion 540 may include an active material with a higher swelling rate during charging than an active material included in the first sub-pattern portion 530, and the fourth sub-pattern portion 570 may include an active material with a higher swelling rate during charging than an active material included in the third sub-pattern portion 560. The current collector 510 may be formed of a metal foil such as copper, a copper alloy, nickel, and a nickel alloy.

In some embodiments, the first sub-pattern portion 530 and the third sub-pattern portion 560 may include a graphite material, and the second sub-pattern portion 540 and the fourth sub-pattern portion 570 may include a silicon material. In other embodiments, the first sub-pattern portion 530 and the third sub-pattern portion 560 may include a graphite material, and the second sub-pattern portion 540 and the fourth sub-pattern portion 570 may include a graphite material and a silicon material. In some embodiments, the second sub-pattern portion 540 and the fourth sub-pattern portion 570 may be formed of a silicon material or a mixture of a graphite material and a silicon material.

The second sub-pattern portion 540 of the first active material layer 520 may be formed as a single layer formed of a silicon material or a mixture of a graphite material and a silicon material. The fourth sub-pattern portion 570 of the second active material layer 550 may include a first pattern layer 571 formed on the current collector 510 and a second pattern layer 572 formed on the first pattern layer 571 and including an active material with a high swelling rate during charging. In some embodiments, the first pattern layer 571 may include a graphite material, and the second pattern layer 572 may include a silicon material. In other embodiments, the first pattern layer 571 may include a graphite material, and the second pattern layer 572 may include a graphite material and a silicon material. That is, the second pattern layer 572 may be formed of a silicon material or a mixture of a graphite material and a silicon material.

A thickness T52 of the second sub-pattern portion 540 of the first active material layer 520 may be smaller than a thickness T51 of the first sub-pattern portion 530. A width W52 of the second sub-pattern portion 540 may be smaller than a width W51 of the first sub-pattern portion 530. In some embodiments, the width W52 of the second sub-pattern portion 540 may be equal to or larger than the width W51 of the first sub-pattern portion 530.

The thickness and the width of the third sub-pattern portion 560 may be equal to the thickness T51 and the width W51 of the first sub-pattern portion 530, and the thickness and a width W53 of the fourth sub-pattern portion 570 may be equal to the thickness T52 and the width W52 of the second sub-pattern portion 540. That is, the sum of a thickness T53 of the first pattern layer 571 and a thickness T54 of the second pattern layer 572 of the fourth sub-pattern portion 570 may be equal to the thickness T52 of the second sub-pattern portion 540. In some embodiments, the thickness T52 of the second sub-pattern portion 540 may be different from the thickness of the fourth sub-pattern portion 570.

For example, referring to FIG. 19, the second sub-pattern portion 540 on the first active material layer 520 may be arranged at a position opposite to (e.g., overlapping) the position of the fourth sub-pattern portion 570 on the second active material layer 550. In another example, the first sub-pattern portion 530 and the fourth sub-pattern portion 570 may be formed in opposing (e.g., overlapping) positions.

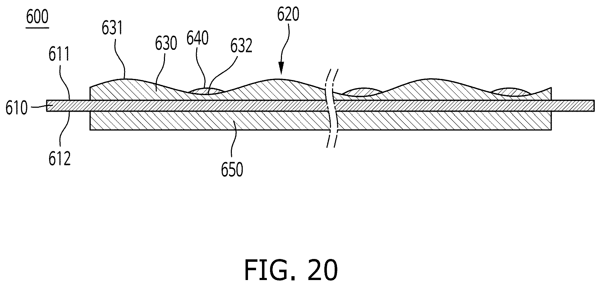

FIG. 20 is a cross-sectional view for showing an example of an electrode according to yet another embodiment of the present invention.

Referring to FIG. 20, an electrode 600 according to the sixth embodiment of the present invention may include a current collector 610 made of a metal material, a first active material layer 620 formed on a first surface 611 of the current collector 610, and a second active material layer 650 formed on a second surface 612 opposite to the first surface 611 of the current collector 610. The first active material layer 620 may include a first pattern portion 630 and a second pattern portion 640, which are alternately arranged in a longitudinal direction of the current collector 610. The second pattern portion 640 may contain an active material swelling more during charging than an active material included in the first pattern portion 630. The current collector 610 may be formed of a metal foil such as copper, a copper alloy, nickel, and a nickel alloy.

In some embodiments, the first pattern portion 630 may include a graphite material, and the second pattern portion 640 may include a silicon material. In other embodiments, the first pattern portion 630 may include a graphite material, and the second pattern portion 640 may include a graphite material and a silicon material. That is, the second pattern portion 640 may be formed of a silicon material or a mixture of a graphite material and a silicon material.

The first pattern portion 630 may be formed in a waveform in the longitudinal direction of the current collector 610. That is, the first pattern portion 630 may include a thick ridge region 631 (e.g., having a wave portion protruding away from the current collector 610) and a thin valley region 632 (e.g., having a depression portion between two ridge regions 631), which are alternately arranged. The second pattern portion 640 may be formed in the valley region 632 of the first pattern portion 630. The second pattern portion 640 may be thinner than the ridge region 631 of the first pattern portion 630. The height at the top of the second pattern portion 640 may be smaller than the height at the top of the ridge region 631 of the first pattern portion 630 (e.g., relative to the first surface 611 of the current collector 610).

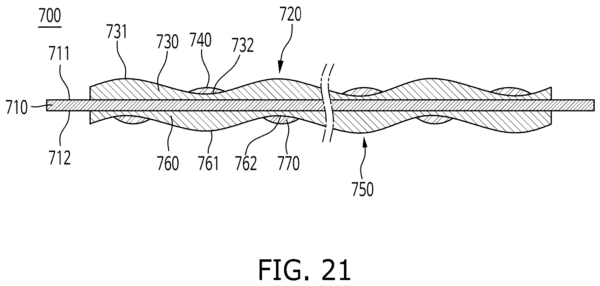

FIG. 21 is a cross-sectional view for showing an example of an electrode according to still another embodiment of the present invention.

Referring to FIG. 21, an electrode 700 according to still another embodiment of the present invention may include a current collector 710 made of a metal material, a first active material layer 720 formed on a first surface 711 of the current collector 710, and a second active material layer 750 formed on a second surface 712 opposite to the first surface 711 of the current collector 710. The first active material layer 720 may include a first sub-pattern portion 730 and a second sub-pattern portion 740, which are alternately arranged in a longitudinal direction of the current collector 710, and the second active material layer 750 may include a third sub-pattern portion 760 and a fourth sub-pattern portion 770, which are alternately arranged in the longitudinal direction of the current collector 710.

The second sub-pattern portion 740 may contain an active material swelling more during charging than an active material included in the first sub-pattern portion 730, and the fourth sub-pattern portion 770 may contain an active material swelling more during charging than an active material included in the third sub-pattern portion 760. The current collector 710 may be formed of a metal foil such as copper, a copper alloy, nickel, and a nickel alloy.

In some embodiments, the first sub-pattern portion 730 and the third sub-pattern portion 760 may include a graphite material, and the second sub-pattern portion 740 and the fourth sub-pattern portion 770 may include a silicon material. In other embodiments, the first sub-pattern portion 730 and the third sub-pattern portion 760 may include a graphite material, and the second sub-pattern portion 740 and the fourth sub-pattern portion 770 may include a graphite material and a silicon material. That is, the second sub-pattern portion 740 and the fourth sub-pattern portion 770 may be formed of a silicon material or a mixture of a graphite material and a silicon material.

The first sub-pattern portion 730 of the first active material layer 720 may be formed in a waveform in the longitudinal direction of the current collector 710. That is, the first sub-pattern portion 730 may include a thick ridge region 731 and a thin valley region 732, which are alternately arranged. The second sub-pattern portion 740 may be formed in the valley region 732 of the first sub-pattern portion 730. The second sub-pattern portion 740 may be thinner than the ridge region 731 of the first sub-pattern portion 730. The height at the top of the second sub-pattern portion 740 may be smaller than the height at the top of the ridge region 731 of the first sub-pattern portion 730 (e.g., relative to the first surface 711 of the current collector 710).

The third sub-pattern portion 760 of the second active material layer 750 may be formed in a waveform in the longitudinal direction of the current collector 710. That is, the third sub-pattern portion 760 may include a thick ridge region 761 and a thin valley region 762, which are alternately arranged. The fourth sub-pattern portion 770 may be formed in the valley region 762 of the third sub-pattern portion 760. The fourth sub-pattern portion 770 may be thinner than the ridge region 761 of the third sub-pattern portion 760. The height at the top of the fourth sub-pattern portion 770 may be smaller than the height at the top of the ridge region 761 of the third sub-pattern portion 760 (e.g., a distance relative to the second surface 712 of the current collector 710).

The ridge region 731 of the first sub-pattern portion 730 of the first active material layer 720 may face the valley region 762 of the third sub-pattern portion 760 of the second active material layer 750.

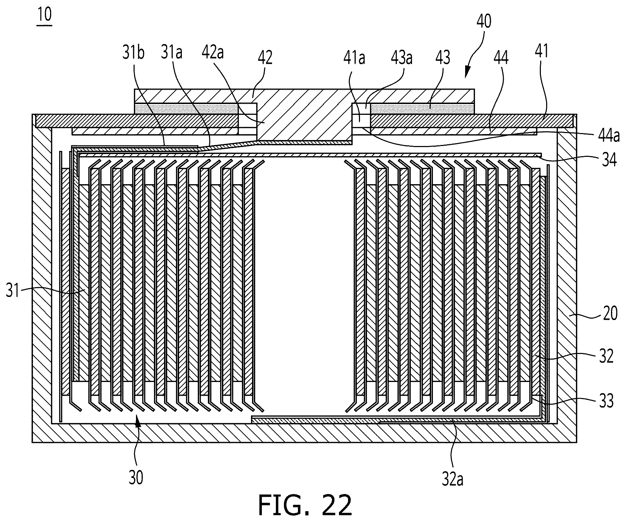

FIG. 22 is a cross-sectional view for showing an example of a secondary battery according to some embodiments of the present invention.

Referring to FIG. 22, a secondary battery 10 according to some embodiments of the present invention may include an electrode assembly 30 including a first electrode 31, a separator 33, and a second electrode 32, a case 20 accommodating the electrode assembly 30 and electrically connected to the second electrode 32, and a cap assembly 40 closing an opening of the case 20 and electrically connected to the first electrode 31.

The electrode assembly 30 may include the separator 33 and the first electrode 31 and the second electrode 32 positioned with the separator 33 interposed therebetween and may be wound in a jelly-roll shape.

The first electrode 31 includes a first substrate and a first active material layer on the first substrate. A first electrode tab 31a may extend outwardly from a first uncoated portion of the first substrate at where the first active material layer is not located, and the first electrode tab 31a may be electrically connected to the cap assembly 40.

The second electrode 32 includes a second substrate and a second active material layer on the second substrate. A second electrode tab 32a may extend outwardly from a second uncoated portion of the second substrate at where the second active material layer is not located, and the second electrode tab 32a may be electrically connected to the case 20. The first electrode tab 31a and the second electrode tab 32a may extend in opposite directions.

The first electrode 31 may act as a positive electrode. In such an embodiment, the first substrate may be made of, for example, an aluminum foil, and the first active material layer may include, for example, a transition metal oxide. The second electrode 32 may act as a negative electrode. In such an embodiment, the second substrate may be made of, for example, a copper foil or a nickel foil, and the second active material layer may include graphite, for example.

The separator 33 prevents a short circuit between the first electrode 31 and the second electrode 32 while allowing movement of lithium ions therebetween. The separator 33 may be made of, for example, a polyethylene film, a polypropylene film, a polyethylene-polypropylene film, or the like.

The case 20 accommodates the electrode assembly 30 and, together with the cap assembly 40, forms the external appearance of the secondary battery 10. The case 20 may have a substantially cylindrical body portion and a bottom portion connected to one side (e.g., to one end) of the body portion. The case 20 may be made of a metal, such as aluminum, aluminum alloy, or nickel-plated steel.

The second electrode tab 32a may be coupled to the bottom of the case 20 to be electrically connected thereto. An end of the first electrode tab 31a may be coupled to a protruding portion 42a of a terminal plate 42. An insulating tape 31b may be coupled to a portion of the first electrode tab 31a other than the portion coupled to the protruding portion 42a of the terminal plate 42. Because the first electrode tab 31a bent at the top of the electrode assembly 30 may come into contact with a cap plate 41 of the cap assembly 40 or the inner surface of the case 20, resulting in a short circuit, the insulating tape 31b may be coupled to the first electrode tab 31a.

In some embodiments, the second electrode 32 may include a current collector, a first active material layer formed on a first surface of the current collector, and a second active material layer formed on a second surface opposite the first surface of the current collector; at least one of the first active material layer and the second active material layer may include a first pattern portion and a second pattern portion, which are alternately arranged in a longitudinal direction of the current collector; the second pattern portion may include an active material swelling more during charging than an active material included in the first pattern portion; and the second pattern portion may be thinner than the first pattern portion. The second electrode 32 may be formed as any one of the electrodes 100 to 700 respectively according to the embodiments described with reference to FIGS. 1 to 21, so no repeated description thereof will be provided. The first electrode 31 may also be formed as any one of the electrodes 100 to 700 respectively according to the embodiments described with reference to FIGS. 1 to 21.

The cap assembly 40 may include the cap plate 41 having a through hole 41a, the terminal plate 42 disposed on the cap plate 41 and including the protruding portion 42a inserted into the through hole 41a, an upper insulator 43 placed between the cap plate 41 and the terminal plate 42, and a lower insulator 44 positioned between the cap plate 41 and the electrode assembly 30.

The cap plate 41 may be formed in the shape of a disk with the through hole 41a in the center. The cap plate 41 may have a larger diameter than the terminal plate 42 and the upper insulator 43. The cap plate 41 may be welded to the upper end of the case 20 to close an open side of the case 20. In some embodiments, the shape of the cap plate 41 may vary depending on the shape of a case 20 to which the cap plate 41 is fastened.

The terminal plate 42 may be formed in a circular shape with a smaller diameter than the cap plate 41, and the protruding portion 42a inserted into the through hole 41a of the cap plate 41 may be formed in the center of the terminal plate 42. The protruding portion 42a of the terminal plate 42 may protrude toward the electrode assembly 30 while being inserted into the through hole 41a. The first electrode tab 31a may be coupled to the protruding portion 42a of the terminal plate 42. The shape of the terminal plate 42 may vary depending on the shape of the cap plate 41.

The first electrode tab 31a may be coupled to the protruding portion 42a of the terminal plate 42 while the second electrode tab 32a may be coupled to the case 20, so that the terminal plate 42 may serve as a positive electrode while the case 20 may serve as a negative electrode.

The upper insulator 43 may be placed between the cap plate 41 and the terminal plate 42 so that the cap plate 41 and the terminal plate 42 may be electrically insulated. The cap plate 41 and the terminal plate 42 may be made of a conductive metal material and may be electrically connected to the negative electrode, which is the second electrode tab 32a, and the positive electrode, which is the first electrode tab 31a, respectively, so that the upper insulator 43 may insulate the cap plate 41 and the terminal plate 42 to prevent the occurrence of a short circuit. The upper insulator 43 may be made of resin such as polypropylene and polyethylene.

The upper insulator 43 may be formed in the shape of a disk with an insertion hole 43a in the center, as is the cap plate 41. As a result, the protruding portion 42a of the terminal plate 42 may penetrate the insertion hole 43a of the upper insulator 43 and the through hole 41a of the cap plate 41 to be placed inside the case 20. The first electrode tab 31a may be coupled to the protruding portion 42a of the terminal plate 42 positioned inside the case 20. The size of the outer diameter of the upper insulator 43 may be equal or similar to the size of the outer diameter of the terminal plate 42. The outer diameter of the cap plate 41 may be larger than the outer diameter of the upper insulator 43 and the outer diameter of the terminal plate 42. The size of the diameter of the insertion hole 43a of the upper insulator 43 may equal or similar to the size of the diameter of the through hole 41a of the cap plate 41.

The upper insulator 43 may heat and pressurize the cap plate 41 and the terminal plate 42 therebetween to be coupled to the cap plate 41 and the terminal plate 42 by a thermal fusion.

An insulating sheet 34 may be arranged between the cap assembly 40 and the electrode assembly 30 to insulate between the upper portion of the electrode assembly 30 and the first electrode tab 31a. The insulating sheet 34 may be placed on the upper portion of the electrode assembly 30. The diameter of the insulating sheet 34 may be smaller than the outer diameter of the electrode assembly 30. The insulating sheet 34 may be made of a resin such as polypropylene and polyethylene.

The lower insulator 44 may be formed in the shape of a disk with an insertion hole 44a in the center, as is the cap plate 41. As a result, the protruding portion 42a of the terminal plate 42 may penetrate the insertion hole 44a of the lower insulator 44 and the through hole 41a of the cap plate 41 to be placed inside the case 20. The size of the outer diameter of the lower insulator 44 may be equal or similar to the size of the outer diameter of the electrode assembly 30. The outer diameter of the lower insulator 44 may be smaller than the outer diameter of the cap plate 41. The insertion hole 44a of the lower insulator 44 may be formed to a size to prevent the cap plate 41 from being exposed to the first electrode tab 31a. The size of the diameter of the insertion hole 44a of the lower insulator 44 may be smaller than or equal to the size of the diameter of the through hole 41a of the cap plate 41.

In some embodiments, the lower insulator 44 may be formed of an insulating tape and coupled to the bottom surface of the cap plate 41, or may be formed of an insulating sheet and coupled to the bottom surface of the cap plate 41 by a thermal fusion.

The secondary battery 10 described with reference to FIG. 22 may be a coin-type or button-type battery. The present invention may also be applied to other types of secondary batteries, such as a cylindrical battery. In FIG. 22, the first electrode tab 31a protrudes upward and is connected to the cap assembly 40, and the second electrode tab 32a protrudes downward and is connected to the case 20. However, both the first electrode tab 31a and the second electrode tab 32a may protrude upward and be connected to the cap assembly 40 and the case 20, respectively.

By way of summation and review, adding silicon to the active material layer has been proposed to increase the capacity of secondary batteries. However, silicon may have a high swelling rate during charging and discharging, thereby causing damage to electrode plates.

In contrast, the present invention provides an electrode and a secondary battery including the same, where an active material layer of the electrode may be formed to include a first pattern portion without a silicon material and a second pattern portion with a silicon material, and the second pattern portion may be formed thinner than the first pattern portion, thereby preventing the electrode from excessively swelling during charging and discharging of the secondary battery.

According to some embodiments of the present invention, an active material layer as a negative electrode with a high swelling rate during charging and discharging of a secondary battery may be formed to include a first pattern portion without a silicon material and a second pattern portion with a silicon material, and the second pattern portion may be formed thinner than the first pattern portion, thereby allowing the negative electrode to swell less during charging and discharging of the secondary battery.

However, aspects and features of the present invention are not limited to those described above, and other aspects and features not mentioned will be clearly understood by a person skilled in the art from the detailed description, described above.

Although the present invention has been described with reference to embodiments and drawings illustrating aspects thereof, the present invention is not limited thereto. Various modifications and variations can be made by a person skilled in the art to which the present invention belongs within the scope of the technical spirit of the present invention and the claims and their equivalents, below.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present invention as set forth in the following claims.

## Claims

1. An electrode (100, 200, 300, 400, 500, 600, 700), comprising:
a current collector (110, 210, 310, 410, 510, 610, 710);
a first active material layer (120, 220, 320, 420, 520, 620, 720) on a first surface of the current collector (110, 210, 310, 410, 510, 610, 710); and
a second active material layer (150, 250, 350, 450, 550, 650, 750) on a second surface of the current collector (110, 210, 310, 410, 510, 610, 710), the second surface being opposite the first surface,
wherein at least one of the first active material layer (120, 220, 320, 420, 520, 620, 720) and the second active material layer (150, 250, 350, 450, 550, 650, 750) includes a first pattern portion (130, 230, 330, 430, 530, 630, 730) and a second pattern portion (140, 240, 340, 440, 540, 640, 740), which are alternately arranged in a longitudinal direction of the current collector (110, 210, 310, 410, 510, 610, 710),
wherein the second pattern portion (140, 240, 340, 440, 540, 640, 740) includes an active material with a higher swelling rate during charging than an active material in the first pattern portion (130, 230, 330, 430, 530, 630, 730), and
wherein the second pattern portion (140, 240, 340, 440, 540, 640, 740) is thinner than the first pattern portion (130, 230, 330, 430, 530, 630, 730).

2. The electrode (100, 200, 300, 400, 500, 600, 700) as claimed in claim 1, wherein the first pattern portion (130, 230, 330, 430, 530, 630, 730) includes a graphite material, and the second pattern portion (140, 240, 340, 440, 540, 640, 740) includes a silicon material or a combination of a graphite material and a silicon material.

3. The electrode (100) as claimed in claim 2, wherein a thickness (T12) of the second pattern portion (140) is set based on a content of the silicon material.

4. The electrode (100) as claimed in any one of the preceding claims, wherein a maximum thickness (T12c) of the second pattern portion (140) during charging is level with a maximum thickness (T11c) of the first pattern portion (130) during charging.

5. The electrode (100, 300) as claimed in any one of the preceding claims, wherein the second pattern portion (140, 340) includes a plurality of second pattern portions, the plurality of second pattern portions gradually increasing in thickness in the longitudinal direction of the current collector (110, 310).

6. The electrode (100, 300) as claimed in any one of the preceding claims, wherein the second pattern portion (140, 340) includes a plurality of second pattern portions, the plurality of second pattern portions gradually increasing in width in the longitudinal direction of the current collector (110, 340).

7. The electrode (200, 400) as claimed in any one of the preceding claims, wherein:
the first active material layer (220, 420) includes a first sub-pattern portion (230, 430) and a second sub-pattern portion (240, 440) alternately arranged in the longitudinal direction of the current collector (210, 410), and
the second active material layer (250, 450) includes a third sub-pattern portion (260, 460) and a fourth sub-pattern portion (270, 470) alternately arranged in the longitudinal direction of the current collector (210, 410).

8. The electrode (300, 400, 500) as claimed in any one of the preceding claims, wherein the second pattern portion (340, 440, 540) includes:
a first pattern layer (341, 441, 541) on the current collector (310, 410, 510); and
a second pattern layer (342, 442, 542) on the first pattern layer (341, 441, 541) and including an active material with a high swelling rate during charging.

9. The electrode (300, 400, 500) as claimed in claim 8, wherein the first pattern layer (341, 441, 541) includes a graphite material, and the second pattern layer (342, 442, 542) includes a silicon material or a combination of a graphite material and a silicon material.

10. The electrode (400) as claimed in any one of claims 7 to 9, wherein:
the second sub-pattern portion (440) includes:
a first pattern layer (441) on the first surface of the current collector (410); and
a second pattern layer (442) on the first pattern layer (441) and including an active material with a high swelling rate during charging, and
the fourth sub-pattern portion (470) includes:
a third pattern layer (471) on the second surface of the current collector (410); and
a fourth pattern layer (472) on the third pattern layer (471) and including an active material with a high swelling rate during charging.

11. The electrode (400) as claimed in claim 10, wherein the first pattern layer (441a) and the third pattern layer (471a) have the same thickness, and the second pattern layer (442a) is thicker than the fourth pattern layer (472a).

12. The electrode (400) as claimed in claim 10, wherein the second pattern layer (442b) and the fourth pattern layer (472b) have the same thickness, and the first pattern layer (441b) is thicker than the third pattern layer (471b).

13. The electrode (600, 700) as claimed in claim 1, wherein the first pattern portion (630, 730) has a waveform in the longitudinal direction of the current collector (610, 730), and the second pattern portion (640, 740) formed in a valley region (632, 732) of the first pattern portion (630, 730).

14. The electrode (700) as claimed in claim 1, wherein:
the first active material layer (720) includes a first sub-pattern portion (730) in a waveform in the longitudinal direction of the current collector (710) and a second sub-pattern portion (740) formed in a valley region (732) of the first sub-pattern portion (730),
the second active material layer (750) includes a third sub-pattern portion (760) in a waveform in the longitudinal direction of the current collector (710) and a fourth sub-pattern portion (770) formed in a valley region (762) of the third sub-pattern portion (760), and
a ridge region (731) of the first sub-pattern portion (730) faces the valley region (762) of the third sub-pattern portion (760).

15. A secondary battery (10), comprising:
an electrode assembly (30) including a first electrode (31), a separator (33), and a second electrode (32) according to any one of the preceding claims;
a case (20) accommodating the electrode assembly (30) and electrically connected to the second electrode (32); and
a cap assembly (40) closing an opening of the case (20) and electrically connected to the first electrode (31).
